# FASCICULE DE BREVET EUROPEEN

(11) **EP 2 790 928 B1**
(45) Date de publication et mention de la délivrance du brevet: **22.02.2017**
(21) Numéro de dépôt: 12809228.5
(22) Date de dépôt: 14.12.2012
(51) Int. Cl.: B60C 11/04, B60C 11/03

(54) **BANDE DE ROULEMENT AYANT DES ELEMENTS DE SCULPTURE RECOUVERTS D'UN MATERIAU THERMOPLASTIQUE**
LAUFSTREIFEN BEINHALTEND PROFILELEMENTE BESCHICHTET MIT EINEM THERMOPLASTISCHEN MATERIAL
TREAD WITH PROFILE ELEMENTS COATED WITH A THERMOPLASTIC MATERIAL

(30) Priorité: 16.12.2011 FR 1161803
(43) Date de publication de la demande: 22.10.2014
(73) Titulaire: Compagnie Générale des Etablissements Michelin, 63000 Clermont-Ferrand (FR); Michelin Recherche et Technique S.A., 1763 Granges-Paccot (CH)
(72) Inventeur: ABAD, Vincent, F-63040 Clermont-Ferrand Cedex 9 (FR); PERRIN, Frédéric, F-63040 Clermont-Ferrand Cedex 9 (FR); DUVERNIER, Marc, F-63040 Clermont-Ferrand Cedex 9 (FR)
(74) Mandataire: Sidhu, Alban
(86) Numéro de dépôt international: PCT/EP2012/075606
(87) Numéro de publication internationale: WO 2013/087870

(56) Documents cités:
- EP-A1- 2 042 346
- EP-A2- 0 320 215
- WO-A1-2005/044594
- WO-A1-2010/072235
- WO-A1-2010/137143
- JP-A- H01 212 602
- JP-A- H09 164 809
- JP-A- 2000 158 911
- JP-A- 2003 054 216
- JP-A- 2010 047 072
- US-A- 5 840 137
- US-A1- 2010 154 948

## Description

L'invention concerne des pneumatiques et plus particulièrement la bande de roulement de tels pneumatiques.

Pour obtenir des performances satisfaisantes en roulage notamment sur chaussée mouillée, il est connu de pourvoir une bande de roulement d'un pneumatique avec une sculpture formée par des éléments de sculpture séparés les uns des autres par des découpures (rainures de largeur moyenne supérieure ou égale à 2 mm et/ou incisions de largeur moyenne inférieure à 2 mm), ces découpures étant obtenues par exemple par moulage. Les éléments de sculpture ainsi formés comprennent une face de contact destinée à venir en contact avec la chaussée pendant le roulage et des faces latérales délimitant également les découpures ; l'intersection de chaque face latérale avec la face de contact forme une arête facilitant le contact du pneumatique avec la chaussée et notamment lorsque celle-ci est mouillée. Plus généralement, on définit une arête comme la limite géométrique de contact d'un élément de sculpture avec le sol en roulage.

Par éléments de sculpture, on distingue des éléments ne faisant pas le tour complet du pneumatique (blocs) et des éléments faisant le tour complet (nervures). Par ailleurs, les éléments de sculpture peuvent comporter une ou plusieurs incisions pour former des arêtes supplémentaires, chaque incision pouvant ou non déboucher sur au moins une face latérale de l'élément de sculpture. Par définition, une incision est l'espace délimité par deux faces principales en vis-à-vis distantes l'une de l'autre d'une largeur inférieure à 2 mm.

Le document WO 2005/063509 divulgue une bande de roulement pour bande de roulement depneumatique comprenant :
- une pluralité d'éléments de sculpture comprenant une face de contact destinée à venir en contact avec la chaussée pendant le roulage d'un pneumatique pourvu de ladite bande et des faces latérales, la limite du contact de la face de contact avec le sol formant au moins une arête ;
- une pluralité de découpures sous la forme de rainure et/ou d'incision, lesdites découpures étant délimitées par des faces latérales en vis-à-vis ;
- chaque élément de sculpture étant formé avec au moins un premier mélange caoutchouteux dit mélange de base ;
ladite bande de roulement ayant, vue en coupe dans un plan contenant l'épaisseur de ladite bande, comprend au moins un sillon recouvert d'une composition d'élastomères qui présente un module d'élasticité sous compression E' à 23°C compris entre 30 et 50 MPa. Cette bande de roulement permet d'améliorer les performances sur sol mouillé des bandages pneumatiques qui en sont équipés.

L'amélioration des propriétés d'adhérence, particulièrement sur sol enneigé, reste cependant une préoccupation constante des concepteurs de pneumatiques.

Le document JP2010047072 A présente une bande de roulement correspondant au préambule de la revendication 1.

Dans ce but, il est proposé une bande de roulement en caoutchouc comprenant :
- une pluralité d'éléments de sculpture (1) comprenant des faces latérales (13,14,15,16) et une face de contact (2) destinée à être en contact avec la chaussée pendant le roulage d'un pneumatique pourvu de ladite bande, la limite du contact de la face de contact (2) avec le sol formant au moins une arête (23, 24, 25, 26),
- une pluralité de découpures (3, 4) sous la forme de rainure et/ou d'incision, les dites découpures (3,4) étant délimitées par des faces latérales en vis-à-vis,
- chaque élément de sculpture (1) étant formé avec au moins un premier mélange de caoutchouc (dit « mélange de base »),
cette bande de roulement ayant, vue en coupe dans un plan contenant l'épaisseur de la bande, au moins une face délimitant au moins une découpure recouverte au moins en partie avec une couche d'un matériau de recouvrement, le matériau de recouvrement étant une composition polymère thermoplastique de module d'Young supérieur à 100 MPa et la composition polymère thermoplastique comportant au moins un polymère thermoplastique dont la température de transition vitreuse est positive, et un élastomère thermoplastique styrénique ("TPS") insaturé fonctionnalisé dont la température de transition vitreuse est négative, ledit élastomère TPS étant porteur de groupes fonctionnels choisis parmi les groupes époxyde, carboxyle, anhydride ou ester d'acide, caractérisée en ce que ladite composition polymère thermoplastique de la couche du matériau de recouvrement comprend aussi un poly(pphénylène éther) ("PPE").

La présence d'un matériau de recouvrement en polymère thermoplastique sur les arêtes d'une bande de roulement de pneumatique permet de créer un effet d'accrochage des pains de sculpture sur un sol enneigé et ainsi d'améliorer encore l'adhérence de la bande de roulement sur un tel sol. En effet, la couche du matériau de recouvrement présente une rigidité très élevée qui lui permet de « couper et gratter » la neige.

L'invention ainsi que ses avantages seront aisément compris à la lumière de la description et des exemples de réalisation qui suivent, ainsi que les figures 1 à 6 relatives à ces exemples qui schématisent, respectivement :
- la figure 1 représente une vue partielle en plan d'une sculpture à blocs d'une bande de roulement ;
- la figure 2 montre les blocs de la figure 1 en coupe transversale selon la ligne de coupe II-II ;
- la figure 3 présente en vue de dessus une éprouvette de test de frottement sur un sol enneigé
- la figure 4 présente en vue de côté l'éprouvette de figure 3 ;
- la figure 5 représente un élément moulant conforme à un procédé de moulage d'une bande de roulement de l'invention ;
- la figure 6a illustre une première étape de moulage par élément moulant de la figure 5, dans laquelle des moyens de découpe sont en contact au niveau de leur extrémité avec la couche de recouvrement recouvrant l'ébauche crue de la bande de roulement ;
- la figure 6b illustre une seconde étape de moulage dans laquelle la lame est en contact avec la couche de recouvrement recouvrant l'ébauche crue ;
- la figure 6c illustre une troisième étape de moulage dans laquelle les moyens de découpe et la lame sont entièrement positionnés dans l'ébauche crue ; et
- la figure 6d représente schématiquement une partie de la bande de roulement selon l'invention à la fin des étapes de moulage des figures 6a-6c.

### I - DESCRIPTION DETAILLEE DE L'INVENTION

### 1. 1 -Définitions

Sauf indication expresse différente, tous les pourcentages (%) indiqués sont des % en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Par « pneumatique » ou « bandage pneumatique », on entend tous les types de bandages élastiques soumis à une pression interne ou non.

Par « bande de roulement » d'un pneumatique, on entend une quantité de matériau caoutchouteux délimitée par des surfaces latérales et par deux surfaces principales dont l'une est destinée à entrer en contact avec une chaussée lorsque le pneumatique roule.
Par « surface de roulement », on entend la surface formée par les points de la bande de roulement du pneumatique qui entrent en contact avec la chaussée lorsque le pneumatique roule.

Par « élément de sculpture », on entend des éléments de la bande de roulement délimités par des découpures, c'est-à-dire des rainures et/ou des incisions. Parmi les éléments de sculpture, on distingue des nervures, faisant le tour complet du pneumatique, et des blocs ne faisant par le tour complet du pneumatique.

Par « moule », on entend un ensemble d'éléments moulants séparés qui, par rapprochement relatif, permettent de délimiter un espace de moulage toroïdal.

Par « surface de moulage » d'un moule, on entend la surface du moule destinée à mouler la surface de la bande de roulement du pneumatique.

Par « lame » d'un élément moulant, on entend une protubérance faisant saillie à partir de la surface de moulage. Parmi les lames, on distingue des lamelles comportant une largeur inférieure à 2 mm et des cordons comportant une largeur supérieure ou égale à 2 mm. Les lamelles sont destinées à mouler des incisions dans la bande de roulement du pneumatique, c'est-à-dire des découpures qui se ferment dans l'aire de contact du pneumatique avec le sol. Les cordons sont destinés à mouler des rainures dans la bande de roulement, c'est-à-dire des découpures qui ne ferment pas dans l'aire de contact du pneumatique avec le sol.

Par « étape de moulage », on entend une opération qui débute au moment où la lame vient en contact avec le matériau recouvrant l'ébauche crue. Cette opération se termine au moment où cette lame quitte la découpure qu'elle a moulée.

### I.2 - Description de la bande de roulement de pneumatique et du matériau de recouvrement pneumatique

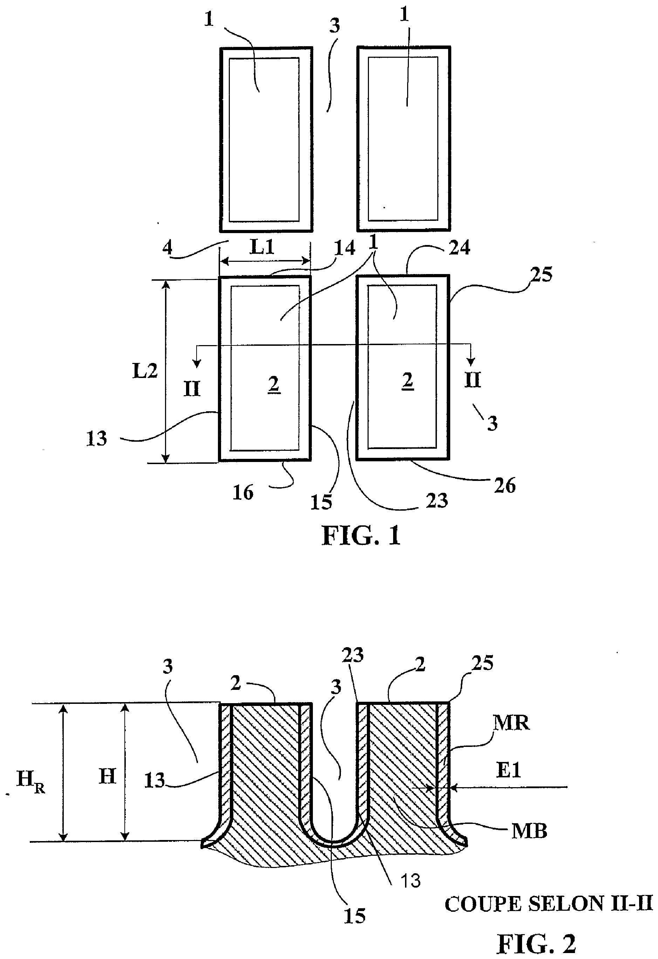

Sur la figure 1, on distingue des faces de contact 2 de blocs 1 de forme rectangulaire d'une sculpture de bande de roulement selon l'invention, lesdits blocs 1 étant délimités par des rainures d'orientation longitudinale 3 et transversale 4. Chacun de ces blocs 1 comporte quatre faces latérales 13, 14, 15, 16 dont les intersections avec la face de contact 2 forment, respectivement, des arêtes 23, 24, 25, 26 qui jouent un rôle important en roulage et en particulier sur chaussée rendue glissante (notamment par la présence d'eau ou de neige). Chaque bloc 1 est de forme rectangulaire de largeur L1 et de longueur L2 (la direction de la longueur L2 des blocs étant dans le cas décrit confondue avec la direction longitudinale de la bande de roulement ou encore la direction circonférentielle sur le pneumatique pourvu de ladite bande.

Les quatre faces latérales 13, 14, 15, 16 sont recouvertes en totalité avec une épaisseur E1 (visible sur la figure 2) sensiblement constante (sur toute la hauteur Hr de recouvrement, dans le cas présent égale à la profondeur H des rainures) d'un matériau de recouvrement MR différent d'une composition de caoutchouc MB (dite composition de base dans ce qui suit) en ce que le matériau de recouvrement MR est un matériau thermoplastique.

Sur la coupe transversale représentée à la figure 2 et réalisée selon la ligne II-II de la figure 1 et perpendiculaire aux faces de contact 2 de deux blocs 1, on distingue la présence en surface du matériau de recouvrement MR sur les faces latérales 13 et 15 limitant les rainures d'orientation longitudinale 3.

Selon ce mode de réalisation de l'invention, le matériau de recouvrement s'étend, à l'état neuf, jusqu'à l'arête formée par la limite entre la face de contact et la face latérale dudit élément de sculpture. Dans ce mode de réalisation, les propriétés de la couche de recouvrement sont utilisées dès les premiers kilomètres de roulage.

L'épaisseur E1 du matériau de recouvrement est de préférence supérieure à 0.1 mm, plus préférentiellement comprise entre 0.25 et 1.0 mm.

Selon un autre mode de réalisation de l'invention (non représenté), le matériau de recouvrement s'étend radialement, à l'état neuf, à partir du fond de la découpure, sur une hauteur Hr au moins égale à 4 mm. Cela permet, lorsque la hauteur résiduelle des éléments de sculpture est proche de 4 mm d'améliorer le comportement sur sol enneigé par la mise en action de la couche de recouvrement très rigide. On sait en effet que les pneumatiques spécialisés pour l'adhérence sur sol enneigé voient leurs propriétés diminuer lorsque l'épaisseur résiduelle des éléments de sculptures devient proche de 4 mm et en-dessous. Pour de tels pneumatiques, ce mode de réalisation assure le prolongement de leurs qualités intrinsèques même avec une faible hauteur d'éléments de sculpture.

### I.3 - Méthodes de tests

### I.3.a - Coefficient de frottement mesuré sur éprouvettes

Les tests de frottement ont été conduits avec un tribomètre linéaire selon la méthode décrite dans l'article intitulé « Investigation ofrubber friction on snow for tyres » écrit par Sam Ella, Pierre-Yves Formagne, Vasileios Koutsos et Jane R. Blackford (38th LEEDS-Lyon Symposium on tribology, Lyon, 6 - 9 Septembre 2011).

Les paramètres du test sont la vitesse égale à 0.5 ms⁻¹ et la charge de 0.82 kN. La vitesse stabilisée est atteinte avec une accélération de 5 ms⁻².

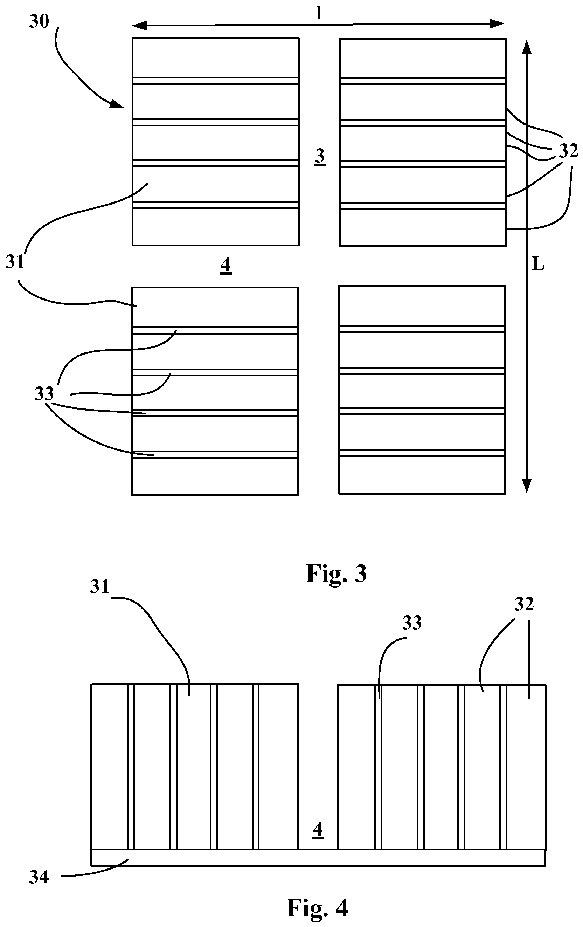

L'éprouvette 30 utilisée est présentée aux figures 3 (vue de dessus) et 4 (vue de côté) annexées. Cette éprouvette est constituée de quatre blocs 31 de mélange caoutchouteux moulés sur un support caoutchouteux 34 parallélépipédique (de longueur L=60 mm, de largeur 1=56 mm et d'épaisseur 2 mm).

Les blocs de largeur L₁ égale à 25 mm et de longueur L₂ égale à 27 mm, sont séparés par une rainure longitudinale 3 et une rainure rainure transversale 4, toutes deux de l'ordre de 6 mm de large. Chaque bloc comporte quatre incisions 33 d'orientation axiale Y débouchantes de part et d'autre du bloc de 0,6 mm d'épaisseur chacune qui séparent le bloc 31 en cinq parties égales. La hauteur des blocs est de 9 mm. Le déplacement de l'éprouvette est effectué dans la direction longitudinale X, normale à l'orientation axiale Y des incisions 33.

Chaque bloc présente une couche du matériau de recouvrement sur une seule des ses arêtes. Cette arête est orientée axialement.

Les tests ont été réalisés sur une piste de longueur 110 mm, recouverte d'une neige artificielle compacte, à une température de -10°C.

La charge et la force tangentielle sont enregistrées durant le déplacement horizontal du tronçon de bande de roulement. On calcule alors le coefficient de frottement qui est obtenu en divisant la valeur moyenne de la force tangentielle par la charge appliquée sur les 30 premiers millimètres du déplacement.

### I.3.b - Mesure du coefficient de frottement d'une bande de roulement de pneumatique

Les tests sur pneumatiques ont été réalisés selon la méthode décrite dans le document ASTM F1805-00.

### I.4 - Le matériau de recouvrement

La bande de roulement selon un aspect essentiel de l'invention comporte un matériau de recouvrement qui est un matériau thermoplastique.

Ce matériau thermoplastique est un polymère thermoplastique ou une composition comportant majoritairement au moins un polymère thermoplastique.

Un tel matériau permet à la couche du matériau de recouvrement de « couper et gratter » la neige.

Selon un objet de l'invention le matériau de recouvrement est un matériau thermoplastique qui présente un module d'Young supérieur à 500 MPa.

Dans le cas de l'utilisation d'un polymère thermoplastique classique, on dépose avantageusement une couche adhésive sur ledit polymère thermoplastique afin qu'il puisse adhérer aux compositions de caoutchouc voisines dans la bande de roulement du pneumatique.

Selon un mode particulier de réalisation de l'invention, le polymère thermoplastique est préférentiellement un polymère amorphe. Les polymères thermoplastiques sont caractérisés par leur température de transition vitreuse (en abrégé Tg), ils n'ont pas de température de fusion : ils se ramollissent (Tᵣ est la température de ramollissement) au-delà d'une certaine température.

Selon un autre mode de réalisation de l'invention, le polymère thermoplastique est préférentiellement un polymère semi-cristallin. Les polymères thermoplastiques semi-cristallins présentent une morphologie avec coexistence de phases amorphes et cristallines en proportions variables. Ils possèdent une température de fusion des zones cristallines, T_{f}. Au-delà de celle-ci, leur structure devient amorphe.

Selon un mode de réalisation, les polymères thermoplastiques sont mis en forme à l'état fondu c'est-à-dire au-delà de la température de fusion pour les semi-cristallins, et au-dessus de la transition vitreuse, pour les amorphes.

La température de fusion ou de ramollissement de la composition polymère thermoplastique utilisé est préférentiellement choisie supérieure à 150°C, plus préférentiellement supérieure à 160°C, en particulier supérieure à 200°C, afin de conserver une bonne tenue mécanique durant la cuisson du pneumatique.

Le polymère thermoplastique est choisi préférentiellement dans le groupe constitué par les polyamides, les polyesters, les polyimides, les matériaux cellulosiques, plus particulièrement dans le groupe constitué par les polyamides et les polyesters. Parmi les polyamides, on peut citer notamment les polyamides 4-6, 6-6, 11 ou 12. Parmi les polyesters, on peut citer par exemple les PET (polyéthylène téréphtalate), PEN (polyéthylène naphthalate), PBT (polybutylène téréphthalate), PBN (polybutylène naphthalate), PPT (polypropylène téréphtathalate), PPN (polypropylène naphthalate). Parmi les matériaux cellulosiques, on peut notamment citer l'acétate de cellulose.

Pour certaines applications particulières pour lesquelles les températures de cuisson peuvent être très basses, on peut également envisager des polyoléfines de type polyethylène ou polypropylène.

Le polymère thermoplastique est préférentiellement un polyester, plus préférentiellement un PET. Le polymère thermoplastique est préférentiellement un polyamide, plus préférentiellement un polyamide 6 ou un polyamide 6-6, encore plus préférentiellement un polyamide 6.

Selon un autre objet de l'invention, le matériau de recouvrement est une composition thermoplastique polymère de module d'Young supérieur à 100 MPa et qui comporte au moins un polymère thermoplastique dont la température de transition vitreuse est positive, un poly(p-phénylène éther) ("PPE"), et un élastomère thermoplastique styrénique ("TPS") insaturé fonctionnalisé dont la température de transition vitreuse est négative, ledit élastomère TPS étant porteur de groupes fonctionnels choisis parmi les groupes époxyde, carboxyle, anhydride ou ester d'acide.

La composition thermoplastique polymère présente un module d'Young ou module d'élasticité en extension à faible déformation supérieur à 100 MPa à 23°C, c'est-à-dire qu'il est de l'ordre de 10 fois supérieur au module d'Young d'une composition de caoutchouc d'élastomères.

Cette composition spécifique permet d'assurer une adhésion directe et performante du matériau de recouvrement de l'invention à une matrice ou composition d'élastomère diénique telle que celles couramment utilisées dans des bandages pneumatiques, en particulier à température élevée.

Le polymère thermoplastique majoritaire est soit amorphe, dans ce cas, la température de fusion (notée Tf) de ce polymère thermoplastique est préférentiellement supérieure à 100°C, plus préférentiellement supérieure à 150°C, notamment supérieure à 200°C.

Le deuxième constituant essentiel de la composition de polymère thermoplastique selon ce mode de réalisation est un élastomère thermoplastique styrénique insaturé fonctionnalisé, ledit élastomère étant porteur de groupes ou fonctions époxyde, carboxyle, anhydride d'acide ou ester d'acide.

Préférentiellement, les groupes fonctionnels sont des groupes époxydes, c'est-à-dire que l'élastomère thermoplastique est un élastomère époxydé.

La Tg dudit élastomère est par définition négative, de préférence inférieure à - 20°C, plus préférentiellement inférieure à - 30°C.

On rappellera ici que les élastomères thermoplastiques styréniques (en abrégé "TPS") sont des élastomères thermoplastiques se présentant sous la forme de copolymères blocs à base de styrène. De structure intermédiaire entre polymères thermoplastiques et élastomères, ils sont constitués de manière connue de séquences rigides polystyrène reliées par des séquences souples élastomère, par exemple polybutadiène, polyisoprène ou poly(éthylène/butylène).

C'est la raison pour laquelle, de manière connue, les copolymères TPS se caractérisent généralement par la présence de deux pics de transition vitreuse, le premier pic (température la plus basse, négative, correspondant à Tg₂) étant relatif à la séquence élastomère du copolymère TPS, le second pic (température la plus haute, positive, typiquement aux alentours de 80°C ou plus) étant relatif à la partie thermoplastique (blocs styrène) du copolymère TPS.

Ces élastomères TPS sont souvent des élastomères triblocs avec deux segments rigides reliés par un segment souple. Les segments rigides et souples peuvent être disposés linéairement, en étoile ou branchés. Ces élastomères TPS peuvent être aussi des élastomères diblocs avec un seul segment rigide relié à un segment souple. Typiquement, chacun de ces segments ou blocs contient au minimum plus de 5, généralement plus de 10 unités de base (par exemple unités styrène et unités isoprène pour un copolymère blocs styrène/ isoprène/ styrène). En cela, bien entendu, ils ne doivent pas être confondus avec des élastomères copolymères diéniques statistiques tels que par exemple des caoutchoucs SIR (copolymères styrène-isoprène) ou SBR (copolymères styrène-butadiène) qui de manière bien connue n'ont aucun caractère thermoplastique.

Ceci étant rappelé, une caractéristique essentielle de l'élastomère TPS utilisé dans le matériau de recouvrement de l'invention est qu'il est insaturé. Par élastomère TPS insaturé, on entend par définition et de manière bien connue un élastomère TPS qui est pourvu d'insaturations éthyléniques, c'est-à-dire qui comporte des doubles liaisons carbone-carbone (conjuguées ou non) ; réciproquement, un élastomère TPS dit saturé est bien entendu un élastomère TPS qui est dépourvu de telles doubles liaisons.

Une deuxième caractéristique essentielle de l'élastomère TPS utilisé dans la composition de polymère thermoplastique de l'invention est qu'il est fonctionnalisé, porteur de groupes fonctionnels choisis parmi les groupes ou fonctions époxyde, carboxyle, anhydride ou ester d'acide. Selon un mode de réalisation particulièrement préférentiel, cet élastomère TPS est un élastomère époxydé, c'est-à-dire porteur d'un ou plusieurs groupes époxydes.

De préférence, l'élastomère insaturé est un copolymère comportant comme unités de base des blocs styrène (c'est-à-dire polystyrène) et des blocs diène (c'est-à-dire polydiène), notamment des blocs isoprène (polyisoprène) ou butadiène (polybutadiène) ; un tel élastomère est choisi en particulier dans le groupe constitué par les copolymères blocs styrène/ butadiène (SB), styrène/ isoprène (SI), styrène/ butadiène/ butylène (SBB), styrène/ butadiène/ isoprène (SBI), styrène/ butadiène/ styrène (SBS), styrène/ butadiène/ butylène/ styrène (SBBS), styrène/ isoprène/ styrène (SIS), styrène/ butadiène/ isoprène/ styrène (SBIS) et les mélanges de ces copolymères.

Plus préférentiellement, cet élastomère insaturé est un copolymère du type triblocs choisi dans le groupe constitué par les copolymères blocs styrène/ butadiène/ styrène (SBS), styrène/ butadiène/ butylène/ styrène (SBBS), styrène/ isoprène/ styrène (SIS), styrène/ butadiène/ isoprène/ styrène (SBIS) et les mélanges de ces copolymères ; plus particulièrement, il s'agit d'un SBS ou SIS, notamment d'un SBS.

Selon un autre mode de réalisation préférentiel de l'invention, le taux de styrène, dans l'élastomère TPS insaturé est compris entre 5 et 50%. En dehors du domaine indiqué, il existe un risque de voir l'effet technique visé, à savoir un compromis d'adhésion qui n'est plus optimal vis-à-vis d'une part le matériau de recouvrement en composition polymère thermoplastique, d'autre part de l'élastomère diénique auquel est destiné le matériau de recouvrement. Pour ces raisons, le taux de styrène est plus préférentiellement compris entre 10 et 40%.

La masse moléculaire moyenne en nombre (notée Mn) de l'élastomère TPS est préférentiellement comprise entre 5 000 et 500 000 g/mol, plus préférentiellement comprise entre 7 000 et 450 000.

Des élastomères TPS insaturés et époxydés, tels que par exemple SBS, sont connus et disponibles commercialement, par exemple auprès de la société Daicel sous la dénomination "Epofriend".

La composition de polymère thermoplastique a pour autre caractéristique de comporter, en combinaison avec le polymère thermoplastique et l'élastomère TPS insaturé fonctionnalisé précédemment décrits, au moins un polymère de poly(p-phénylène éther) (ou poly(1,4-phénylène-éther)) (noté en abrégé "PPE").

Les polymères thermoplastiques PPE sont bien connus de l'homme du métier, ce sont des résines solides à température ambiante (20°C). Préférentiellement, le PPE utilisé ici possède une température de transition vitreuse (notée ci-après Tg₃) qui est supérieure à 150°C, plus préférentiellement supérieure à 180°C. Quant à sa masse moléculaire moyenne en nombre (Mn), elle est préférentiellement comprise entre 5 000 et 100 000 g/mol.

A titres d'exemples non limitatifs de polymères PPE utilisables dans le renfort composite de l'invention, on peut citer notamment ceux choisis dans le groupe constitué par les poly(2,6-diméthyl-1,4-phénylène-éther), poly(2,6-diméthyl-co-2,3,6-triméthyl-1,4-phénylène-éther), poly-(2,3,6-triméthyl-1,4-phénylène-éther), poly(2,6-diéthyl-1,4-phénylène-éther), poly(2-méthyl-6-éthyl-1,4-phénylène-éther), poly(2-méthyl-6-propyl-1,4-phénylène-éther), poly-(2,6-dipropyl-1,4-phénylène-éther), poly(2-éthyl-6-propyl-1,4-phénylène-éther), poly(2,6-dilauryl-1,4-phénylène-éther), poly(2,6-diphényl-1,4-phénylène-éther), poly(2,6-diméthoxy-1,4-phénylène-éther), poly(1,6-diéthoxy-1,4-phénylène-éther), poly(2-méthoxy-6-éthoxy-1,4-phénylène-éther), poly(2-éthyl-6-stéaryloxy-1,4-phénylène-éther), poly(2,6-dichloro-1,4-phénylène-éther), poly(2-méthyl-6-phényl-1,4-phénylène-éther), poly(2-éthoxy-1,4-phénylène-éther), poly(2-chloro-1,4-phénylène-éther), poly(2,6-dibromo-1,4-phénylène-éther), poly(3-bromo-2,6-diméthyl-1,4-phénylène-éther), leurs copolymères respectifs, et les mélanges de ces homopolymères ou copolymères.

Selon un mode de réalisation particulier et préférentiel, le PPE utilisé est le poly(2,6-diméthyl-1,4-phénylène-éther) également dénommé parfois polyphénylène oxyde (ou, en abrégé, "PPO"). De tels PPE ou PPO commercialement disponibles sont par exemple les PPE de dénomination "Xyron S202" de la société Asahi Kasei, ou les PPE de dénomination "Noryl SA120" de la société Sabic.

De préférence, dans la composition de polymère thermoplastique du renfort composite de l'invention, la quantité de polymère PPE est ajustée de telle manière que le taux pondéral de PPE soit compris entre 0.05 et 5 fois, plus préférentiellement entre 0.1 et 2 fois le taux pondéral de styrène présent dans l'élastomère TPS fonctionnalisé lui-même. En dessous des minima préconisés, l'adhésion du matériau de recouvrement au caoutchouc peut être diminuée alors qu'au-delà des maxima indiqués, il existe un risque de fragilité de la couche.

Pour toutes ces raisons, le taux pondéral de PPE est plus préférentiellement encore compris entre 0,2 et 1,5 fois le taux pondéral de styrène dans l'élastomère TPS.

La Tg des polymères thermoplastiques ci-dessus (Tg₁, Tg₂ et Tg₃) est mesurée de manière connue par DSC (*Differential Scanning Calorimetry*), par exemple et sauf indications différentes spécifiées dans la présente demande, selon la norme ASTM D3418 de 1999.

La masse moléculaire moyenne en nombre (Mn) est déterminée de manière connue, par chromatographie d'exclusion stérique (SEC). L'échantillon est préalablement solubilisé dans du tétrahydrofuranne à une concentration d'environ 1 g/l; puis la solution est filtrée sur filtre de porosité 0,45 µm avant injection. L'appareillage utilisé est une chaîne chromatographique "WATERS alliance". Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales "STYRAGEL" ("HMW7", "HMW6E" et deux "HT6E"). Le volume injecté de la solution de l'échantillon de polymère est de 100 µl. Le détecteur est un réfractomètre différentiel "WATERS 2410" et son logiciel associé d'exploitation des données chromatographiques est le système "WATERS MILLENIUM". Les masses molaires moyennes calculées sont relatives à une courbe d'étalonnage réalisée avec des étalons de polystyrène.

Bien que les trois constituants décrits ci-dessus (polymère thermoplastique, élastomère TPS insaturé fonctionnalisé et PPE) soient suffisants à eux seuls pour conférer au matériau de recouvrement l'invention de très hautes propriétés d'adhésion à un caoutchouc insaturé tel que du caoutchouc naturel, certains additifs conventionnels tels que colorant, charge, plastifiant, tackifiant, antioxydant ou autre stabilisant, système de réticulation ou vulcanisation tel que soufre et accélérateur, pourraient être éventuellement ajoutés à la composition polymère thermoplastique précédemment décrite.

Selon un autre mode de réalisation de l'invention, le matériau de recouvrement est constitué d'au moins deux couches, l'une étant un matériau thermoplastique de module d'Young supérieur à 500 MPa, l'autre est une composition polymère thermoplastique de module d'Young supérieur à 100 MPa, comportant au moins un polymère thermoplastique dont la température de transition vitreuse est positive, un poly(p-phénylène éther) ("PPE"), et un élastomère thermoplastique styrénique ("TPS") insaturé fonctionnalisé dont la température de transition vitreuse est négative, ledit élastomère TPS étant porteur de groupes fonctionnels choisis parmi les groupes époxyde, carboxyle, anhydride ou ester d'acide.
Le matériau de recouvrement en composition polymère thermoplastique peut comporter des additifs ajoutés au polymère, notamment au moment de la mise en forme de ce dernier, ces additifs pouvant être par exemple des agents de protection contre le vieillissement, des plastifiants, des charges telles que silice, argiles, talc, kaolin ou encore fibres courtes ; des charges peuvent par exemple être utilisées pour rendre la surface du film rugueuse et contribuer ainsi à améliorer sa prise de colle et/ou son adhésion aux couches avec lesquelles il est destiné à être au contact.

### I.5 - Adhésion du matériau de recouvrement aux compositions de caoutchouc de la bande de roulement du pneumatique

Dans le cas où, le matériau de recouvrement est un polymère thermoplastique, celui-ci est préférentiellement pourvu d'une couche adhésive au regard de chaque couche de composition de caoutchouc du pneumatique avec laquelle il est au contact.

Selon un mode particulier de réalisation de l'invention, pour faire adhérer le caoutchouc au polymère thermoplastique, on pourra utiliser tout système adhésif approprié, par exemple une simple colle textile du type « RFL » (résorcinol-formaldéhyde-latex) comportant au moins un élastomère diénique tel que du caoutchouc naturel, ou toute colle équivalente connue pour conférer une adhésion satisfaisante entre du caoutchouc et un film thermoplastique conventionnels tels que des films en polyester ou en polyamide.

A titre d'exemple, le procédé d'encollage peut comporter essentiellement les étapes successives suivantes : passage dans un bain de colle, suivi d'un essorage (par exemple par soufflage, calibrage) pour éliminer l'excès de colle ; puis séchage par exemple par passage dans un four (par exemple pendant 30 s à 180°C) et enfin traitement thermique (par exemple pendant 30 s à 230°C°).

Avant l'encollage ci-dessus, il peut être avantageux d'activer la surface du film, par exemple par voie mécanique et/ou physique et/ou chimique, pour améliorer la prise de colle et/ou son adhésion finale au coutchouc. Un traitement mécanique pourra consister par exemple en une étape préalable de matage ou de rayage de la surface ; un traitement physique pourra consister par exemple en un traitement par rayonnement tel qu'un faisceau d'électrons ; un traitement chimique pourra par exemple consister en un passage préalable dans un bain de résine époxy et/ou composé isocyanate.

La surface du matériau thermoplastique étant en règle générale particulièrement lisse, il peut être également avantageux d'ajouter un épaississant à la colle utilisée, afin d'améliorer la prise totale d colle du film lors de son encollage.

### I.6 - Procédés de fabrication d'une bande de roulement comportant une couche de recouvrement

Un moyen d'obtention d'une telle sculpture de bande de roulement consiste par exemple à recouvrir une ébauche de bande de roulement réalisée dans un mélange de base avec une couche de mélange de recouvrement d'épaisseur appropriée avant de procéder au moulage de la bande de roulement et des rainures et des incisions. Après moulage, le mélange de recouvrement se trouvant sur la face de contact de la nervure peut être laissé en place ou bien éliminé par un moyen mécanique (notamment par un meulage).

Un autre mode réalisation industrielle d'une bande de roulement selon l'invention peut consister à déposer, sur l'ébauche de pneumatique non vulcanisé pourvue d'une bande de roulement en mélange de base non vulcanisé, des bandelettes de mélange différent du mélange de base, comme cela est décrit dans le document EP 0510550 (les bandelettes pouvant être déposées dans la direction circonférentielle et/ou transversale sur la bande de roulement). Une autre manière peut consister à réaliser la bande de roulement par co-extrusion de deux mélanges (ou plus) au moment de l'extrusion de la bande de roulement.

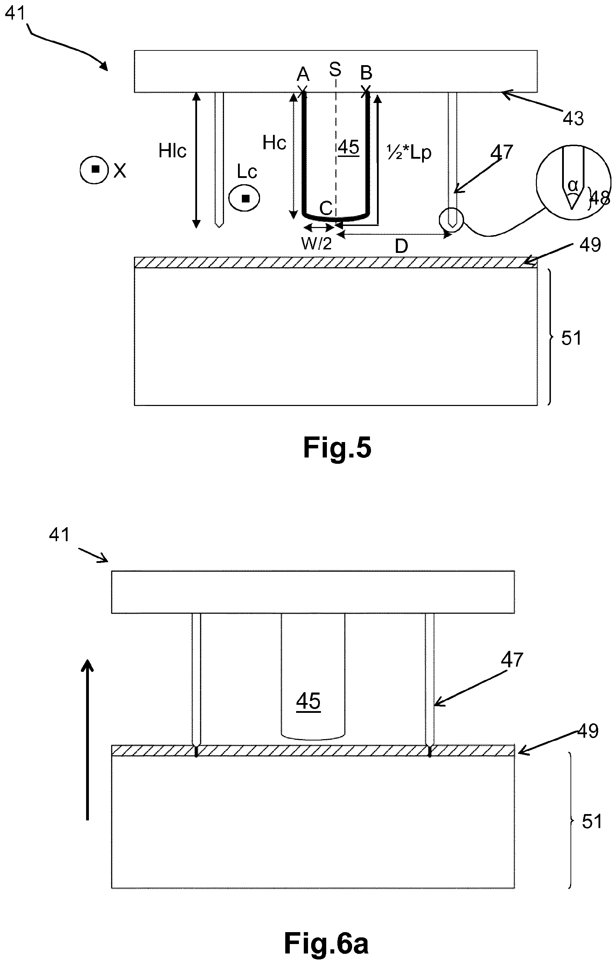

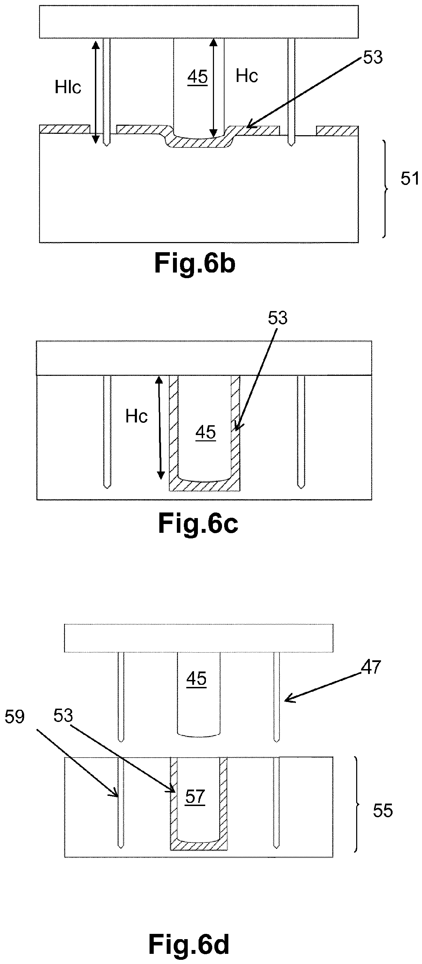

Un autre mode de réalisation de l'invention, consiste préférentiellement en un élément moulant d'un moule pour le moulage et la vulcanisation d'une bande de roulement d'un pneumatique, dont la bande de roulement comprend une surface de roulement destinée à venir en contact avec un sol au cours d'un roulage dudit pneumatique, cet élément moulant comportant une surface de moulage destinée à mouler une partie de la surface de roulement du pneumatique et une lame de longueur Lc et de hauteur Hc destinée à mouler une incision ou une rainure dans la bande de roulement, Cette lame comporte par exemple une extrémité arrondie s'étendant dans la longueur de lame selon une direction d'extension particulière. L'élément moulant comprend deux moyens de découpe disposés de part et d'autre de la lame à une certaine distance de cette lame et chaque moyen de découpe comporte une arête s'étendant selon la direction d'extension, cette arête formant un angle aigu α dans un plan de coupe perpendiculaire à cette direction d'extension. Ce mode de réalisation est expliqué grace à la description des figures 5 et 6 qui suit, où des éléments sensiblement identiques ou similaires seront désignés par des références identiques.
La figure 5 représente un élément moulant 41 conforme à un aspect de l'invention.
Plus particulièrement, l'élément moulant 41 comprend une surface de moulage 43 destinée à mouler une partie de la surface de roulement d'un pneumatique. L'élément moulant 41 comporte également des lames 45 dont une seule est ici représentée pour faciliter la compréhension de l'invention. La lame est ici un cordon 45 destiné à mouler une rainure dans la bande de roulement du pneumatique. Par « rainure » dans une bande de roulement, on entend une découpure dans cette bande dont la largeur, c'est-à-dire la distance séparant deux parois latérales de cette rainure, est supérieure à 2 mm. Le cordon 45 s'étend également en hauteur à partir de cette surface de moulage 43. Le cordon 45 s'étend également en longueur selon une direction d'extension longitudinale X en faisant saillie à partir de la surface de moulage 43. Dans le moule, cette direction peut être une direction circonférentielle qui suit la circonférence du moule. En variante, la direction d'extension longitudinale est une direction transversale perpendiculaire à la direction circonférentielle du moule. Dans une autre variante, cette direction d'extension longitudinale est une direction oblique formant un angle non nul avec la direction circonférentielle et la direction transversale du moule.

La figure 5 représente l'élément moulant 41 vu dans un plan de coupe perpendiculaire à la direction d'extension X. Dans ce plan de coupe, le cordon 45 présente une section ayant une symétrie par rapport à un axe de symétrie S. L'axe de symétrie S s'étend ici dans la hauteur Hc du cordon 45 et il sépare ce cordon 45 en deux demi-cordons de largeur W/2.

La section du cordon a ici une forme rectangulaire. Par « forme rectangulaire », on entend que la face supérieure du cordon est perpendiculaire aux faces latérales de ce cordon, c'est-à-dire que les faces latérales du cordon font avec la face supérieure de ce cordon un angle compris entre 85° et 95°.

L'invention englobe également le cas où les zones de raccord entre les faces latérales du cordon et la face supérieure de ce cordon sont arrondies ainsi que le cas où les zones de raccord entre les faces latérales du cordon et l'embase sont également arrondies.

Dans des variantes de réalisation complémentaires, la section du cordon peut prendre une autre forme qu'une forme rectangulaire, telle qu'une forme carrée, une forme triangulaire, etc...

On notera également que la section du cordon 45 présente, entre deux points d'intersection A et B du cordon 45 avec la surface de moulage 43, un profil représenté en traits gras sur la figure 5. Ce profil a une longueur de profil Lp telle que Lp=2*(Hc+W/2), c'est-à-dire que la longueur de profil Lp correspond à deux fois la hauteur Hc du cordon 45 auquel on ajoute la largeur W de ce cordon.

Dans l'exemple de la figure 5, les points d'intersection A et B sont facilement déterminables, les parois latérales du cordon 45 étant perpendiculaires à la surface de moulage 43. En variante, dans le cas où les parois latérales du cordon sont raccordées à la surface de moulage 43 par deux zones de raccordement arrondies formant deux arcs de cercle, les points d'intersection A et B correspondent respectivement à l'intersection des arcs de cercle avec des droites passant par les centres des arcs de cercle et séparant ces arcs en deux ½ arcs identiques.

L'élément moulant 41 de la figure 5 présente également deux moyens de découpe 47 disposées de part et d'autre du cordon 45. Ces moyens de découpe s'étendent dans leur longueur selon une direction parallèle à la direction longitudinale X du cordon 45. Par « direction parallèle », on entend que la direction d'extension des moyens de découpe forme un angle compris entre -5° et +5° avec la direction d'extension longitudinale X du cordon. La hauteur Hlc des moyens de découpe est au moins égale à la hauteur Hc du cordon.

Chaque moyen de découpe comporte une extrémité 48 apte à découper une couche 49 d'un matériau prédéterminé, dit matériau de recouvrement dans la suite de la description, ce matériau particulier couvrant une ébauche crue 51 d'une bande de roulement de pneumatique. Plus particulièrement, chaque moyen de découpe comporte à son extrémité une arête de découpe (représentée par une pointe sur la figure 5). Cette arête de découpe présente dans le plan de la figure 5, un angle α inférieur ou égal à 60° (voir le médaillon associé à la figure 5 constituant un agrandissement de l'extrémité d'un des deux moyens de découpe 47). Dans un mode de réalisation préférentiel, l'angle α est inférieur ou égal à 35°.

On notera que cette arête de découpe peut avoir été préalablement durcie pour améliorer sa tenue mécanique dans le temps. Par exemple, l'arête de découpe peut avoir été durcie lors d'un traitement thermique particulier. En variante, il est possible de prévoir que le matériau constituant l'arête de découpe soit plus résistant que le reste de l'élément moulant.

On notera également que les moyens de découpe 47 sont disposés dans l'élément moulant 41 de sorte que la distance D entre chaque extrémité des moyens de découpe et l'axe de symétrie S de la section du cordon 45 est inférieure ou égale à la moitié de la longueur Lp du profil de la section, telle que D=Hc+W/2. Dit autrement, l'axe de symétrie S intersecte le profil du cordon 45 en un point C pour définir deux sous-profils. Un premier sous-profil correspond au segment A-C et un second sous-profil correspond au segment B-C. Pour chaque moyen de coupe, la distance entre l'arête de ce moyen de coupe et l'axe de symétrie S est inférieure ou égale à la longueur du sous-profil adjacent à ce moyen de coupe, c'est-à-dire le sous-profil appartenant au demi-cordon le plus proche du moyen de coupe. Dans l'exemple de la figure 5, le sous-profil le plus proche du moyen de coupe 47 est le sous-profil correspondant au segment B-C.

Les figures 6a à 6c illustrent plus en détails les différentes étapes pour la mise en place du matériau de recouvrement dans une rainure de la bande de roulement.

La figure 6a divulgue notamment une première étape dans laquelle l'élément moulant 41 et l'ébauche crue 51 se rapprochent. Ce rapprochement, est par exemple, initié par une membrane (non représentée) dans le moule. Cette membrane sous l'action d'une quantité de vapeur mise sous pression se gonfle et vient repousser l'ébauche crue vers l'élément moulant 1. Plus particulièrement, la figure 6a présente l'instant où les moyens de découpe 47 viennent découper le matériau de recouvrement 49. Cette étape de découpe est facilitée par l'action des arêtes coupantes des moyens de découpe.

La figure 6b illustre une seconde étape dans laquelle le cordon 45 vient enfoncer l'ébauche crue 51. Plus particulièrement, dans cette étape le cordon 45 vient en contact contre une partie 53 de matériau découpée dans la couche de matériau de recouvrement. Le cordon 45 vient ainsi entraîner cette partie 53 dans la profondeur de l'ébauche crue 51.

On notera ici que la hauteur Hlc des moyens de découpe 47 est supérieure à la hauteur Hc du cordon 45. Ainsi l'étape de découpe de la figure 6a est antérieure à l'étape d'enfoncement de l'ébauche crue 51 par le cordon 45. En variante, il est possible de prévoir que la hauteur Hlc des moyens de découpe 47 soit identique à la hauteur Hc du cordon 45. Dans ce cas l'étape de la figure 6a et l'étape de la figure 6b ont lieu au même instant.

La figure 6c illustre une troisième étape dans laquelle le cordon 45 vient enfoncer l'ébauche crue sur toute sa hauteur Hc. L'ensemble de la partie 53 du matériau de recouvrement se retrouve alors dans l'ébauche crue. Une fois cette étape réalisée, il est alors possible de réaliser la vulcanisation de l'ébauche crue, c'est-à-dire le passage de l'état plastique à l'état élastique du matériau caoutchouteux constituant l'ébauche crue.

La figure 6d représente le résultat des différentes étapes de moulage et de vulcanisation de l'ébauche crue illustrée aux figures 6a à 6c. La partie de la bande de roulement 55 ainsi obtenue comprend une rainure 57 obtenue par un moulage de caoutchouc autour du cordon 45 et deux incisions 59 obtenues par un moulage de caoutchouc autour des deux moyens de découpe 47. On notera ici que l'ensemble des parois de la rainure, c'est-à-dire les parois latérales et la paroi de fond encadrée par les parois latérales, sont recouvertes par la partie découpée 53 du matériau de recouvrement.

### II - EXEMPLES DE REALISATION DE L'INVENTION

### II.1 - Préparation du matériau de recouvrement

Le matériau thermoplastique est conditionné sous forme de granulat.

Les granulats sont ensuite par exemple mis en oeuvre par un procédé d'extrusion suivi d'un procédé de calandrage ou par un procédé d'extrusion suivi d'un procédé de soufflage. L'homme de l'art saura optimiser les paramètres des procédés en fonction de chaque type de polymères thermoplastiques.

Dans le cas d'une formulation thermoplastique, celle-ci est réalisée au moyen d'une extrudeuse corotative bivis puis transformé sous forme de granulés en sortie de filière.

### II.2 - Tests sur des échantillons de bande de roulement de pneumatique

Les essais qui suivent démontrent les excellentes propriétés de frottement d'échantillons de sculpture de pneumatiques sur un sol enneigé.

Pour les besoins de ces essais, quatre échantillons de pains de sculpture de pneumatiques Alpin, ont été réalisés, nommés PS.1, PS.2, PS.3 et PS4. Le pain de sculpture PS.1 ne comporte aucune des faces délimitant les découpures recouverte avec un matériau thermoplastique. Le pain de sculpture PS.2 comporte une face délimitant chaque découpure recouverte avec un matériau de recouvrement du type polymère polyester PET préadhérisé avec une colle RFL, d'une épaisseur de 0.5 mm. Les pains de sculpture PS.3 et PS.4 comportent une face délimitant une découpure recouverte avec un matériau de recouvrement de type composition de polymère thermoplastique à base de 70% de polyamide 6 (de marque «Ultramid B33 » de BASF), 21 % de SBS époxydé (de marque « Epofrind AT501 » de Daicel Chemical Industries), 9% de PPE (de marque « Xyron S202A » de Asahi Kasei Plastics), et respectivement d'une épaisseur de 0.4 mm, et 0.25 mm.

Les essais ont permis de mesurer les coefficients de frottement des 4 échantillons, exprimés ici en valeur relative par rapport à l'échantillon de référence PS.1, dont sa valeur est arbitrairement fixée à 100. Les résultats sont présentés dans le tableau 1 annexé.

On constate que les pains de sculpture PS.2 et PS.3 dont une face délimitant chaque découpure est recouverte avec un matériau de recouvrement respectivement du type polymère polyester et composition à base de polymère polyamide présentent un coefficient de frottement supérieur à celui du pain de sculpture PS.1 dont aucune des faces délimitant les découpures n'est recouverte avec un matériau thermoplastique.

L'échantillon PS.4 présente un coefficient de frottement inférieur à celui de PS.3 car l'épaisseur de l'arête recouverte avec un matériau polymère thermoplastique est inférieure à celle de l'arête de l'échantillon PS.3, ceci témoigne de l'effet de l'épaisseur de l'arête sur la valeur du coefficient de frottement ; plus l'arête est épaisse plus elle exerce un effet important sur le phénomène de frottement de la bande de roulement sur la piste enneigée.

### II.3 - Tests effectués sur des pneumatiques

On réalise des tests sur deux pneumatiques. L'un est équipé d'une bande de roulement de référence P.1 à base d'un mélange de caoutchouc conventionnel, sans la présence de mélange de recouvrement. L'autre est équipé d'une bande de roulement de pneumatique P.2 selon l'invention à base du même mélange de base que celui de la bande de roulement du pneumatique de référence et en plus d'un matériau de recouvrement d'une épaisseur de 0.5 mm, en PET, et préadhérisé avec une colle RFL.

Les tests effectués sur les pneumatiques sont réalisés selon la méthode décrite dans le document ASTM F1805-00. Les résultats sont répertoriés dans le tableau 2.

Le pneumatique équipé de la bande de roulement selon l'invention présente un coefficient de frottement sur un sol enneigé supérieur à celui de la bande de roulement du pneumatique de référence qui ne comporte pas un matériau de recouvrement.

**Tableau 1**

| Echantillon de pain de sculpture | PS.1 | PS.2 | PS.3 | PS.4 |
|---|---|---|---|---|
| Coefficient de frottement | 100 | 115 | 112 | 102 |

**Tableau 2**

| Pneumatique | P.1 | P.2 |
|---|---|---|
| Coefficient de frottement | 100 | 112 |

## Revendications

1. Bande de roulement de pneumatique comprenant :
- une pluralité d'éléments de sculpture (1) comprenant des faces latérales (13,14,15,16) et une face de contact (2) destinée à être en contact avec la chaussée pendant le roulage d'un pneumatique pourvu de ladite bande, la limite du contact de la face de contact (2) avec le sol formant au moins une arête (23, 24, 25, 26),
- une pluralité de découpures (3, 4) sous la forme de rainure et/ou d'incision, les dites découpures (3,4) étant délimitées par des faces latérales en vis-à-vis,
- chaque élément de sculpture (1) étant formé avec au moins un premier mélange de caoutchouc (dit « mélange de base »),
cette bande de roulement ayant, vue en coupe dans un plan contenant l'épaisseur de la bande, au moins une face délimitant au moins une découpure recouverte au moins en partie avec une couche d'un matériau de recouvrement, le matériau de recouvrement étant une composition polymère thermoplastique de module d'Young supérieur à 100 MPa et la composition polymère thermoplastique comportant au moins un polymère thermoplastique dont la température de transition vitreuse est positive, et un élastomère thermoplastique styrénique ("TPS") insaturé fonctionnalisé dont la température de transition vitreuse est négative, ledit élastomère TPS étant porteur de groupes fonctionnels choisis parmi les groupes époxyde, carboxyle, anhydride ou ester d'acide, **caractérisée en ce que** ladite composition polymère thermoplastique de la couche du matériau de recouvrement comprend aussi un poly(p-phénylène éther) ("PPE").

2. Bande de roulement selon la revendication 1, dans laquelle le matériau de recouvrement est constitué d'au moins deux couches, l'une étant un matériau thermoplastique de module d'Young supérieur à 500 MPa, l'autre étant une composition polymère thermoplastique de module d'Young supérieur à 100 MPa comportant au moins un polymère thermoplastique dont la température de transition vitreuse est positive, un poly(p-phénylène éther) ("PPE"), et un élastomère thermoplastique styrénique ("TPS") insaturé fonctionnalisé dont la température de transition vitreuse est négative, ledit élastomère TPS étant porteur de groupes fonctionnels choisis parmi les groupes époxyde, carboxyle, anhydride ou ester d'acide.

3. Bande de roulement selon l'une quelconque des revendications 1 et 2, dans laquelle le matériau de recouvrement s'étend, à partir du fond de la découpure, sur une hauteur Hr au moins égale à 4 mm de la hauteur H de ladite face latérale.

4. Bande de roulement selon l'une quelconque des revendications 1 à 3, dans laquelle le matériau de recouvrement s'étend, à l'état neuf, jusqu'à l'arête formée par la limite entre la face de contact et la face latérale dudit élément de sculpture.

5. Bande de roulement selon l'une quelconque des revendications 1 à 4, dans laquelle le polymère thermoplastique est un polymère thermoplastique amorphe

6. Bande de roulement selon l'une quelconque des revendications 1 à 5, dans laquelle le polymère thermoplastique est un polymère thermoplastique semi-cristallin.

7. Bande de roulement selon l'une quelconque des revendications 1 à 6, dans laquelle le polymère thermoplastique est choisi dans le groupe constitué par les polyesters, les polyamides, les polyamides aromatiques, les polyimides, les matériaux cellulosiques, et leurs mélanges.

8. Bande de roulement selon la revendication 7, dans laquelle le polymère thermoplastique est un polyester choisi dans le groupe constitué par le PET (polyéthylène téréphtalate), le PEN (polyéthylène naphthalate), le PBT (polybutylène téréphthalate), le PBN (polybutylène naphthalate), le PPT (polypropylène téréphtathalate), le PPN (polypropylène naphthalate).

9. Bande de roulement selon la revendication 7, dans laquelle le polymère thermoplastique est un polyamide choisi dans le groupe constitué par les polyamides 4-6, 6-6, 6, 11 ou 12.

10. Bande de roulement selon la revendication 7, dans laquelle le polymère thermoplastique est l'acétate de cellulose.

11. Bande de roulement selon l'une quelconque des revendications 1 à 10, dans laquelle le matériau thermoplastique présente une température de fusion ou une température de ramollissement supérieure à 150°C.

12. Bande de roulement selon l'une quelconque des revendications 1 à 11, dans laquelle le matériau de recouvrement présente une épaisseur supérieure à 0.1 mm.

13. Bande de roulement selon la revendication 12, dans laquelle le matériau de recouvrement présente une épaisseur comprise entre 0.25 et 1.0 mm.

14. Bande de roulement selon l'une quelconque des revendications 1 à 13 dans laquelle la couche du matériau de recouvrement est pourvue d'une couche adhésive au regard de chaque couche de composition de caoutchouc adjacente.

## Patentansprüche

1. Laufstreifen für Luftreifen, der Folgendes umfasst:
- mehrere Profilelemente (1), die Seitenflächen (13, 14, 15, 16) und eine Kontaktfläche (2) umfassen, wobei letztere dazu bestimmt ist, beim Rollvorgang eines Luftreifens, der mit dem Laufstreifen versehen ist, mit der Fahrbahn in Kontakt zu sein, wobei der Grenzbereich des Kontakts der Kontaktfläche (2) mit dem Boden mindestens eine Kante (23, 24, 25, 26) bildet,
- mehrere Ausnehmungen (3, 4) in Form von Nuten und/oder Einschnitten, wobei die Ausnehmungen (3, 4) von den sich gegenüberliegenden Seitenflächen begrenzt werden,
- wobei jedes der Profilelemente (1) unter Einsatz mindestens einer ersten Kautschukmischung (als "Grundmischung" bezeichnet) gebildet ist,
wobei dieser Laufstreifen, gemäß einer Schnittansicht durch eine Ebene, welche die Dicke des Streifens beinhaltet, mindestens eine Fläche aufweist, die mindestens eine Ausnehmung begrenzt, wobei sie mindestens teilweise mit einer Schicht aus einem Überzugsmaterial überzogen ist, wobei es sich bei dem Überzugsmaterial um eine thermoplastische Polymerzusammensetzung mit einem Elastizitätsmodul von mehr als 100 MPa handelt, und die thermoplastische Polymerzusammensetzung mindestens ein thermoplastisches Polymer, dessen Glasübergangstemperatur positiv ist, und mindestens ein ungesättigtes styrolartiges thermoplastisches Elastomer ("TPS"), das mit funktionellen Gruppen versehen ist und dessen Glasübergangstemperatur negativ ist, aufweist, wobei das TPS-Elastomer mit funktionellen Gruppen versehen ist, die aus den Gruppen Epoxy, Carbonsäure, Säureanhydrid oder -ester ausgewählt sind, **dadurch gekennzeichnet, dass** die thermoplastische Polymerzusammensetzung der Schicht aus dem Überzugsmaterial weiterhin einen Poly(p-phenylenether) ("PPE") umfasst.

2. Laufstreifen nach Anspruch 1, wobei das Überzugsmaterial aus mindestens zwei Schichten besteht, wobei es sich bei einer um ein thermoplastisches Material mit einem Elastizitätsmodul von mehr als 500 MPa handelt und es sich bei der anderen um eine thermoplastische Polymerzusammensetzung mit einem Elastizitätsmodul von mehr als 100 MPa handelt, die mindestens ein thermoplastisches Polymer, dessen Glasübergangstemperatur positiv ist, einen Poly(p-phenylenether) ("PPE") und ein ungesättigtes styrolartiges thermoplastisches Elastomer ("TPS"), das mit funktionellen Gruppen versehen ist und dessen Glasübergangstemperatur negativ ist, aufweist, wobei TPS-Elastomer mit funktionellen Gruppen versehen ist, die aus den Gruppen Epoxy, Carbonsäure, Säureanhydrid oder -ester ausgewählt sind.

3. Laufstreifen nach einem beliebigen der Ansprüche 1 und 2, wobei das Überzugsmaterial sich, ausgehend vom tiefsten Punkt der Ausnehmung, über eine Höhe Hr von mindestens 4 mm der Höhe H der Seitenfläche erstreckt.

4. Laufstreifen nach einem beliebigen der Ansprüche 1 bis 3, wobei das Überzugsmaterial sich, im Neuzustand, bis zur Kante erstreckt, die vom Grenzbereich zwischen der Kontaktfläche und der Seitenfläche des Profilelements gebildet wird.

5. Laufstreifen nach einem beliebigen der Ansprüche 1 bis 4, wobei es sich bei dem thermoplastischen Polymer um ein amorphes thermoplastisches Polymer handelt.

6. Laufstreifen nach einem beliebigen der Ansprüche 1 bis 5, wobei es sich bei dem thermoplastischen Polymer um ein halbkristallines thermoplastisches Polymer handelt.

7. Laufstreifen nach einem beliebigen der Ansprüche 1 bis 6, wobei das thermoplastische Polymer aus der Gruppe ausgewählt ist, die aus den Polyestern, Polyamiden, aromatischen Polyamiden, Polyimiden, cellulosebasierten Materialien und deren Mischungen besteht.

8. Laufstreifen nach Anspruch 7, wobei es sich bei dem thermoplastischen Polymer um einen Polyester handelt, welcher aus der Gruppe ausgewählt ist, die aus PET (Polyethylenterephthalat), PEN (Polyethylennaphthalat), PBT (Polybutylenterephthalat), PBN (Polybutylennaphthalat), PPT (Polypropylenterephthalat), PPN (Polypropylennaphthalat) besteht.

9. Laufstreifen nach Anspruch 7, wobei es sich bei dem thermoplastischen Polymer um ein Polyamid handelt, das aus der Gruppe ausgewählt ist, die aus den Polyamiden 4-6, 6-6, 6, 11 oder 12 besteht.

10. Laufstreifen nach Anspruch 7, wobei es sich bei dem thermoplastischen Polymer um Celluloseacetat handelt.

11. Laufstreifen nach einem beliebigen der Ansprüche 1 bis 10, wobei das thermoplastische Material eine Schmelztemperatur oder eine Erweichungstemperatur von mehr als 150 °C aufweist.

12. Laufstreifen nach einem beliebigen der Ansprüche 1 bis 11, wobei das Überzugsmaterial eine Dicke von mehr als 0,1 mm aufweist.

13. Laufstreifen nach Anspruch 12, wobei das Überzugsmaterial eine Dicke im Bereich von 0,25 bis 1,0 mm aufweist.

14. Laufstreifen nach einem beliebigen der Ansprüche 1 bis 13, wobei die Schicht des Überzugsmaterials mit einer Haftschicht versehen ist, die der jeweils angrenzenden Kautschukzusammensetzungsschicht gegenüberliegt.

## Claims

1. Tyre tread comprising:
- a plurality of tread pattern elements (1) comprising lateral faces (13, 14, 15, 16) and a contact face (2) which is intended to be in contact with the road surface when a tyre provided with this tread is being driven on, the extent of the contact between the contact face (2) and the ground forming at least one edge corner (23, 24, 25, 26),
- a plurality of cuts (3, 4) in the form of grooves and/or sipes, said cuts (3, 4) being delimited by opposing lateral faces,
- each tread pattern element (1) being formed with at least one first rubber compound (referred to as "base compound"),
this tread having, viewed in section in a plane containing the thickness of the tread, at least one face delimiting at least one cut covered at least in part with a layer of a covering material, the covering material being a thermoplastic polymer composition with a Young's modulus higher than 100 MPa, and the thermoplastic polymer composition containing at least one thermoplastic polymer the glass transition temperature of which is positive, a functionalized unsaturated thermoplastic styrene ("TPS") elastomer the glass transition temperature of which is negative, the said TPS elastomer bearing functional groups selected from the epoxide, carboxy, anhydride or acid ester groups, **characterized in that** said thermoplastic polymer composition of the covering material comprises also a poly(p-phenylene ether) ("PPE").

2. Tread according to Claim 1, in which the covering material is made up of at least two layers, one being a thermoplastic material with a Young's modulus higher than 500 MPa, the other being a thermoplastic polymer composition with a Young's modulus higher than 100 MPa containing at least one thermoplastic polymer the glass transition temperature of which is positive, a poly(p-phenylene ether) ("PPE"), and a functionalized unsaturated thermoplastic styrene ("TPS") elastomer the glass transition temperature of which is negative, the said TPS elastomer bearing functional groups selected from the groups consisting of epoxide, carboxy, anhydride or acid ester groups.

3. Tread according to any one of Claims 1 and 2, in which the covering material extends, from the bottom of the cut, over a height Hr at least equal to 4 mm of the height H of the said lateral face.

4. Tread according to any one of Claims 1 to 3, in which the covering material extends, in the new condition, as far as the edge corner formed by the boundary between the contact face and the lateral face of said tread pattern element.

5. Tread according to any one of Claims 1 to 4, in which the thermoplastic polymer is an amorphous thermoplastic polymer.

6. Tread according to any one of Claims 1 to 5, in which the thermoplastic polymer is a semicrystalline thermoplastic polymer.

7. Tread according to any one of Claims 1 to 6, in which the thermoplastic polymer is selected from the group consisting of polyesters, polyamides, aromatic polyamides, polyimides, cellulose materials and mixtures thereof.

8. Tread according to Claim 7, in which the thermoplastic polymer is a polyester selected from the group consisting of PET (polyethylene terephthalate), PEN (polyethylene naphthalate), PBT (polybutylene terephthalate), PBN (polybutylene naphthalate), PPT (polypropylene terephthalate), PPN (polypropylene naphthalate).

9. Tread according to Claim 7, in which the thermoplastic polymer is a polyamide selected from the group consisting of polyamide 4-6, 6-6, 6, 11 or 12.

10. Tread according to Claim 7, in which the thermoplastic polymer is cellulose acetate.

11. Tread according to any one of Claims 1 to 10, in which the thermoplastic material has a melting point or a softening temperature higher than 150°C.

12. Tread according to any one of Claims 1 to 11, in which the covering material has a thickness greater than 0.1 mm.

13. Tread according to Claim 12, in which the covering material has a thickness comprised between 0.25 and 1.0 mm.

14. Tread according to any one of Claims 1 to 13, in which the layer of the covering material is provided with a layer of adhesive facing each adjacent layer of rubber composition.
